(19) **Europäisches Patentamt**
**European Patent Office**
**Office européen des brevets**

(11) **EP 3 511 704 B1**

(12) **EUROPÄISCHE PATENTSCHRIFT**

(45) Veröffentlichungstag und Bekanntmachung des Hinweises auf die Patenterteilung:
**13.05.2020  Patentblatt 2020/20**

(51) Int Cl.:
*G01N 27/22* *(2006.01)*    *B01D 53/26* *(2006.01)*
*B01D 53/04* *(2006.01)*

(21) Anmeldenummer: **19153667.1**

(22) Anmeldetag: **28.02.2011**

(54) **VERFAHREN UND VORRICHTUNG ZUR BESTIMMUNG EINES IN EINEM ADSORBERMATERIAL ENTHALTENEN ANTEILS EINES ADSORBIERTEN STOFFES**

METHOD AND DEVICE FOR DETERMINING A PROPORTION OF AN ADSORBED MATERIAL COMPRISED IN AN ADSORBER MATERIAL

PROCÉDÉ ET DISPOSITIF DE DÉTERMINATION D'UNE PROPORTION D'UNE SUBSTANCE ADSORBÉE CONTENUE DANS UN MATÉRIAU ADSORBANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2010  DE 102010003710**

(43) Veröffentlichungstag der Anmeldung:
**17.07.2019  Patentblatt 2019/29**

(62) Dokumentnummer(n) der früheren Anmeldung(en) nach Art. 76 EPÜ:
**11706544.1 / 2 556 370**

(73) Patentinhaber: **Endress+Hauser SE+Co. KG 79689 Maulburg (DE)**

(72) Erfinder:
• **Lopatin, Sergey 79540 Lörrach (DE)**
• **Uehlin, Thomas 79650 Schopfheim (DE)**

(74) Vertreter: **Hahn, Christian Endress+Hauser (Deutschland)AG +Co. KG PatServe Colmarer Strasse 6 79576 Weil am Rhein (DE)**

(56) Entgegenhaltungen:
**WO-A2-01/90732     US-A- 4 552 570
US-A- 4 876 890     US-A- 4 882 648
US-B2- 7 332 015**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Bestimmung eines Anteils eines adsorbierten Stoffes, welcher in einem Granulat oder Pulver aus einem Zeolith, einer Zeolithverbindung oder Silikagel als Adsorbermaterial enthalten ist. Weiterhin bezieht sich die Erfindung auf eine entsprechende Vorrichtung. Der adsorbierte Stoff ist beispielsweise Wasser oder ein Gas.

Um einen Stoff von einem in einem im Wesentlichen abgeschlossenen Volumen befindlichen Element fernzuhalten, welches durch diesen Stoff Schaden nehmen könnte, ist es bekannt, einen Adsorber in Form eines Feststoffes oder als Granulat in das Volumen einzubringen, welcher den Stoff aufnimmt und somit von dem Element fernhält. Beispielsweise sind elektronische Bauteile empfindlich gegenüber auskondensierender Luftfeuchte. Ein hygroskopischer Einsatz, welcher in unmittelbarer Nähe des Bauteils in einem gemeinsamen Gehäuse angeordnet ist, entzieht der Luft die Feuchte, wodurch der Auskondensierung vorgebeugt wird. Bekannte Adsorber sind z.B. Zeolithe und Silikagel. Die Aufnahmefähigkeit eines Adsorbers ist jedoch begrenzt, sodass die Kenntnis über den Sättigungsgrad wünschenswert ist.

Zur Bestimmung des Wassergehalts in einem Schüttgut ist aus der DE 19717711 A1 eine Messzelle mit zwei durch einen Zwischenraum voneinander getrennten Elektroden bekannt. Beim Einbringen der Messzelle in das Schüttgut füllt sich der Zwischenraum mit dem Schüttgut, sodass durch eine anschließende Leitfähigkeitsmessung der Feuchtegehalt des Schüttgutes bestimmt werden kann. Der Nachteil bei dieser Methode ist, dass die Güte der Messung davon abhängt, wie homogen der Hohlraum mit dem Schüttgut befüllt ist. Für die Bestimmung eines Gasgehaltes ist diese Methode ungeeignet.

Aus der DD 135241 ist ein Messkondensator zur Bestimmung des Feuchtegehalts im Inneren eines Feststoffes bekannt. In den Feststoff sind Bohrungen eingebracht, in welche der Messkondensator bei Bedarf eingeführt wird. Zur Messung werden die Elektroden des Messkondensators an die Wandung der Bohrung angepresst, mit einer hochfrequenten Wechselspannung beaufschlagt, die Kapazität gemessen und daraus der Feuchtegehalt bestimmt. Ein Nachteil der Erfindung ist darin zu sehen, dass die Abmessungen des Messkondensators und die Bohrungen aufeinander abgestimmt sein müssen. Bei Feststoffen geringer Abmessungen oder spezieller Formgebung ist eine Messung nicht möglich.

US4552570 offenbart eine Feuchtigkeitsmessung eines Trockenmittelgranulats, mit kapazitiven Sensoren. US4876890 offenbart einen kapazitiven Feuchtigkeitssensor bestehend aus einem Formkörper aus Zeolith und daran angebrachten Elektroden.

Der Erfindung liegt die Aufgabe zu Grunde, ein einfaches Verfahren und eine entsprechende Vorrichtung anzugeben, mit welchem/welcher ein Stoff durch ein Zeolith, eine Zeolithverbindung oder ein Silikagel als Adsorbermaterial aus der Umgebung adsorbierbar ist und darüber hinaus der in dem Adsorbermaterial enthaltene Anteil des adsorbierten Stoffes bestimmt werden kann. Die Aufgabe wird von einem Verfahren dadurch gelöst, dass das Adsorbermaterial in Form eines Pulvers oder Granulats vorliegt, und dass ein Formkörper aus dem gleichen Material hergestellt wird, und dass mindestens zwei Elektroden voneinander beabstandet auf die Oberfläche des Formkörpers aufgebracht und/oder fest in den Formkörper eingebracht werden, und der Formkörper dauerhaft in das Pulver oder Granulat eingebracht wird, dass die Elektroden mit einem Wechselstrom beaufschlagt werden, wodurch die Kapazität und/oder der Verlustfaktor $\tan \delta$ als elektrische Kenngröße des Adsorbermaterials ermittelt wird, und dass anhand der ermittelten elektrischen Kenngröße der Anteil des adsorbierten Stoffes im Adsorbermaterial und der Sättigungsgrad des Adsorbermaterials ermittelt wird.

Die beiden Elektroden werden hierbei derart angeordnet, dass sie einen Kondensator bilden. Dieser dient der Ermittlung der elektrischen Kenngröße, welche vom Anteil des im Adsorbermaterial enthaltenen adsorbierten Stoffes abhängig ist und in eindeutigem Zusammenhang mit diesem Anteil steht. Auf diese Weise ist eine Aussage über die bereits aufgenommene Menge des adsorbierten Stoffes möglich. Bei bekannter maximaler Sättigung des Adsorbermaterials ist somit zudem dessen verbleibende Aufnahmekapazität für den zu adsorbierenden Stoff bestimmbar. Durch ständige Messung bzw. in kurzen Intervallen wiederholte Messungen kann der Sättigungsgrad des Adsorbermaterials überwacht werden. Zu den adsorbierten Stoffen zählen beispielsweise Wasser oder polare gasförmige Moleküle.

Das Verfahren beinhaltet, dass als elektrische Kenngröße die Kapazität oder der Verlustfaktor $\tan \delta$ ermittelt wird. Es ist ebenfalls möglich, sowohl die Kapazität als auch den Verlustfaktor zu ermitteln, insbesondere, wenn zwei verschiedene Stoffe adsorbiert werden und deren jeweiliger Anteil zu bestimmen ist. Der Verlustfaktor $\tan \delta$ des Verlustwinkels $\delta$ bezeichnet hierbei das Verhältnis von Wirkleistung zu Blindleistung und ist unabhängig von der Geometrie der Elektroden und des Körpers, in und/oder auf welchem diese angeordnet sind. Er lässt sich aus der Phasenverschiebung $\varphi$ zwischen Strom und Spannung des Prüfkondensators, d.h. den mit der Wechselspannung beaufschlagten Elektroden, folgendermaßen bestimmen:

$$\tan\delta = \tan (\pi/2 - \varphi).$$

Aus dem Verlustfaktor $\tan \delta$ ist der Sättigungsgrad $\alpha$ des Adsorbermaterials direkt bestimmbar. Ähnlich ist bei der Kapazitätsmessung die Dielektrizitätskonstante ein Maß für den Sättigungsgrad. Die Dielektrizitätskonstante und hiermit die Kapazität, sowie der Verlustfaktor werden durch unterschiedliche adsorbierte Stoffe auf Grund deren unterschiedlich ausgeprägten Polarität auch unterschiedlich stark beeinflusst.

Gemäß einer weiteren Ausgestaltung werden die Elektroden mit einem Wechselstrom mit einer Frequenz zwischen 1 und 100 kHz beaufschlagt. Insbesondere für Zeolith als Adsorbermaterial ist dieser Bereich besonders vorteilhaft, da der Verlustfaktor tan $\delta$ von gesättigten Zeolithen in diesem Frequenzbereich nahezu unabhängig von der Messfrequenz ist und somit eine stabile Messung gewährleistet ist.

In einer vorteilhaften Ausgestaltung wird der Formkörper, welcher in das Granulat oder das Pulver eingebracht wird, in einem Sinterverfahren, einem Pressverfahren und/oder CIM-Verfahren - Ceramic Injection Molding - hergestellt. Ist das Adsorbermaterial Zeolith, wird der Formkörper bevorzugt aus einer Mischung eines Zeoliths mit einem Bindemittel gefertigt.

Die Aufgabe wird bezüglich einer Vorrichtung zur Adsorption mindestens eines Stoffes aus der Umgebung, enthaltend ein Granulat oder ein Pulver aus einem Zeolith, einer Zeolithverbindung oder Silikagel als Adsorbermaterial, und zur Bestimmung des im Adsorbermaterial enthaltenen Anteils des adsorbierten Stoffes, dadurch gelöst, dass das Adsorbermaterial in Form von Pulver oder Granulat vorliegt, wobei ein Formkörper aus dem gleichen Material in das Pulver oder Granulat dauerhaft eingebracht ist, wobei mindestens zwei Elektroden voneinander beabstandet auf die Oberfläche des Formkörpers aufgebracht und/oder fest in den Formkörper eingebracht sind, dass der Vorrichtung eine Elektronikeinheit zugeordnet ist, welche die Elektroden mit einem Wechselstrom beaufschlagt, und hiermit die Kapazität und/oder den Verlustfaktor tan $\delta$ als elektrische Kenngröße des Adsorbermaterials ermittelt, und dass die Elektronikeinheit anhand der ermittelten elektrischen Kenngröße den in dem Adsorbermaterial enthaltenen Anteil des adsorbierten Stoffes und den Sättigungsgrad des Adsorbermaterials bestimmt. Anders ausgedrückt ist anhand der elektrischen Kenngröße der Umwandlungsgrad $\alpha$ bzw. der Sättigungsgrad des Adsorbermaterials bestimmbar.

Die erfindungsgemäße Vorrichtung ermöglicht somit neben der Aufnahme des zu adsorbierenden Stoffs auch eine Zustandsdiagnose und hiermit eine Aussage über die verbleibende Lebensdauer als Adsorber. Dies ist insbesondere bei deren Einsatz zum Schutz von Elementen eines Prozessgeräts vor der Anlagerung des zu adsorbierenden Stoffes im Zusammenhang mit Predictive Maintainance von großer Bedeutung. Durch frühzeitige Warnung kann die Vorrichtung durch eine neue ersetzt werden, bevor das Adsorbermaterial vollständig gesättigt ist und ein Schutz vor dem adsorbierten Stoff nicht mehr gewährleistet wäre.

In einer Ausgestaltung ist das Adsorbermaterial ein Zeolith oder eine Verbindung aus einem Zeolith und einem Bindemittel. Der Formkörper ist entsprechend ein Zeolith-Keramikkörper, bzw. ein aus einer Verbindung von Zeolith mit einem Bindemittel hergestellter Keramikkörper, wobei das Bindemittel eine tonartige Substanz ist. Zeolith besitzt eine Kristallstruktur mit relativ großen Hohlräumen und Kanälen, in welche Moleküle entsprechender Größe eindringen können und adsorbiert werden. Insbesondere stark polare Moleküle werden von Zeolith adsorbiert, da diese eine stabile Bindung mit Sauerstoffatomen im Zeolith bilden. Ein Beispiel hierfür sind Wassermoleküle. Aus diesem Grund ist Zeolith insbesondere zur Adsorption von Feuchte geeignet. Die erfindungsgemäße Bestimmung des enthaltenen Anteils an einem oder mehreren adsorbierten Stoffen nutzt aus, dass die adsorbierten Stoffe die Materialeigenschaften des Grundwerkstoffes verändern.

Bei einer weiteren Ausgestaltung der Erfindung ist die Messzelle derart gefertigt, dass das Material der Messzelle Poren aufweist. Die Poren begünstigen den Zugang und die Adsorption von gasförmigen Stoffen.

Gemäß einer bevorzugten Ausgestaltung der Erfindung ist der aus dem Adsorbermaterial bestehende Formkörper in einem Sinterverfahren und/oder einem Pressverfahren oder einem CIM-Verfahren - Ceramic Injection Molding - hergestellt. Durch diese Verfahren lassen sich aus pulverförmigen Stoffen Körper beliebiger Formgebung sowie vorgegebener Dichte erzeugen.

Gemäß einer weiteren Ausgestaltung ist der Formkörper scheibenförmig, ringförmig, quaderförmig oder von zylindrischer Gestalt. Es kann sich hierbei gleichermaßen um Vollkörper oder Hohlkörper handeln.

Bei einer Weiterbildung der erfindungsgemäßen Messzelle sind die Elektroden in Form einer flächigen oder streifenförmigen Beschichtung auf die Oberfläche des Formkörpers aufgebracht.

Bei einer weiteren Ausgestaltung der Erfindung handelt es sich bei dem adsorbierten Stoff um Wasser, Ammoniak, Schwefelwasserstoff, Kohlendioxid, Ozon und/oder Fluorwasserstoff.

In einer Ausgestaltung wird die erfindungsgemäße Vorrichtung zur Bestimmung oder Überwachung eines Sättigungsgrades des als Granulat oder Pulver in einem Behälter gelagerten Adsorbermaterials verwendet. Beispielsweise handelt es sich um einen Lagerbehälter, in welchem das Adsorbermaterial als Rohmaterial bis zu seiner Weiterverarbeitung gelagert wird. Das Einbringen einer Vorrichtung, welche den Sättigungsgrad des Adsorbermaterials mit dem zu adsorbierenden Stoff vor der Verarbeitung überwacht, ermöglicht die Gewährleistung einer ausreichenden Adsorptionsfähigkeit des Endprodukts.

Gemäß einer weiteren Ausgestaltung wird die erfindungsgemäße Vorrichtung als austauschbarer Einsatz zur Aufnahme von Feuchte in einem Prozessgerät verwendet. In der EP 01464923 A1 ist das Problem der Kondensation von Luftfeuchte im Inneren eines Gehäuses eines Prozessgerätes zur Durchflussmessung beschrieben. Die dort vorgeschlagene Lösung beinhaltet die Überwachung der relativen Luftfeuchte und Temperatur im Inneren des Gehäuses und die Kontrolle deren zeitlichen Verlaufs, sodass eine nahende Auskondensierung erkennbar ist und ein Warnhinweis ausgegeben werden kann. Da das Gehäuse im Normalfall luftdicht ausgestaltet ist, ist ein solcher Warnhinweis in der Regel mit einer undichten Stelle im Gehäuse verbunden. Diese kann aufgefunden und abgedichtet bzw. der Messumformer ausgetauscht werden, bevor ein sich auf der Elektronik ablagerndes Kondensat zu dessen Ausfall führen kann. Eine in das Innere des Gehäuses eines derartigen Prozessgerätes eingebrachte erfindungsgemäße Vorrichtung stellt eine verbesserte Alternative hierzu dar. Das Adsorbermaterial adsorbiert in das Gehäuse eindringende Feuchte solange, bis es gesättigt ist. Durch die Bestimmung des Sättigungsgrades mittels der ein- oder aufgebrachten Elektroden ist die Erzeugung eines Warnhinweises möglich, wenn das Adsorbermaterial einen bestimmten Sättigungsgrad erreicht hat und auszutauschen ist.

Die Erfindung wird anhand der nachfolgenden Figuren näher erläutert.

Es zeigen:

Fig. 1 ein erstes Verwendungsbeispiel einer erfindungsgemäßen Vorrichtung;

Fig. 2 ein zweites Verwendungsbeispiel einer erfindungsgemäßen Vorrichtung;

Fig. 3 schematisch einen aus dem Adsorbermaterial bestehenden Vollzylinder mit eingebrachten Elektroden;

Fig. 4a schematisch einen aus dem Adsorbermaterial bestehenden Hohlzylinder mit einer ersten flächigen Elektrodenanordnung;

Fig. 4b schematisch einen aus dem Adsorbermaterial bestehenden Hohlzylinder mit einer zweiten flächigen Elektrodenanordnung;

Fig. 4c schematisch eine Kontaktierungsvariante für eine Anordnung nach Fig. 4a im Schnitt;

Fig. 5 schematisch ein Behältnis mit granularem Adsorbermaterial und eingebrachtem scheibenförmigem Formkörper;

Fig. 5a schematisch einen scheibenförmigen Formkörper mit einer ersten Elektrodenanordnung;

Fig. 5b schematisch einen scheibenförmigen Formkörper mit einer zweiten Elektrodenanordnung;

Fig. 6 ein Diagramm der Kapazität in Abhängigkeit der Sättigung;

Fig. 7 ein Diagramm des Verlustfaktors in Abhängigkeit der Sättigung.

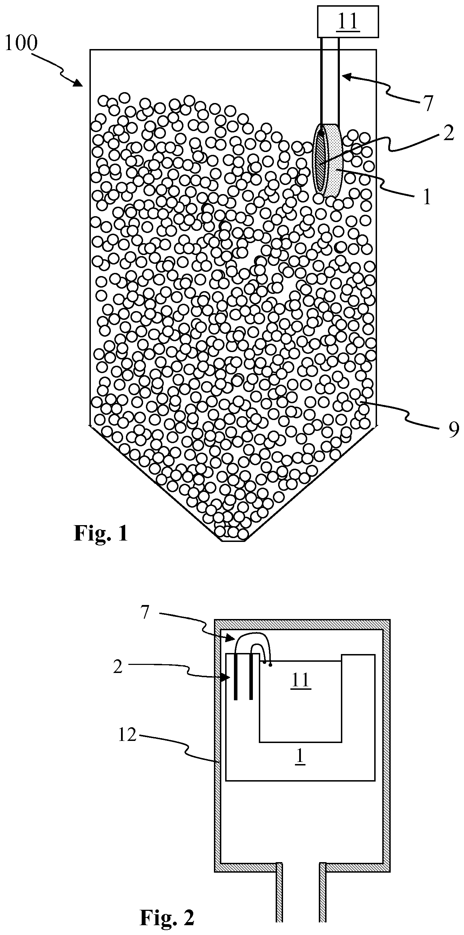

Fig. 1 illustriert ein Anwendungsbeispiel für eine erfindungsgemäße Vorrichtung. Der aus dem Adsorbermaterial bestehende und mit Elektroden 2 versehene Formkörper 1 ist in einen Lagerbehälter 100 eingebracht, in welchem ein ebenfalls aus dem Adsorbermaterial bestehendes Granulat 9 lagert. Derartige Lagerbehälter 100 werden beispielsweise bei der Herstellung von Feuchtepatronen, welche aus portionsweise abgefülltem Granulat 9 aus feuchteadsorbierendem Material bestehen, benötigt. Die Feuchtepatronen sind vielseitig überall dort einsetzbar, wo ein begrenzter Bereich vor Feuchte geschützt werden muss. Da die Feuchteadsorption eine dem Adsorbermaterial inhärente Eigenschaft ist, besteht die Gefahr, dass das Adsorbermaterial bereits im Lagerbehälter 100 Feuchte aufnimmt, falls selbige dort eindringt. Eine aus diesem Granulat 9 hergestellte Trocknungspatrone hätte eine entsprechend der bereits aufgenommenen Menge an Feuchte verkürzte Lebensdauer. Der aus demselben Material bestehende Formkörper 1, welcher mit dem Granulat 9 in den Lagerbehälter 100 eingebracht ist, adsorbiert die Feuchte gleichermaßen. Durch die Bestimmung einer vom Feuchtegehalt abhängigen elektrischen Kenngröße mittels auf und/oder in dem Formkörper 1 angeordneten Elektroden 2, welche über elektrische Leitungen 7 mit einer Elektronikeinheit 11 verbunden sind, ist der Feuchtegehalt des Adsorbermaterials für den Formkörper 1 und somit auch für das Granulat 9 bestimmbar. Dies ermöglicht eine Überwachung des Sättigungsgrades des Granulats 9, sodass sichergestellt ist, dass Trocknungspatronen mit ausreichender Aufnahmekapazität hergestellt werden. Bevorzugt erfolgt die Bestimmung der feuchteabhängigen elektrischen Kenngröße des Adsorbermaterials automatisch in bestimmten Zeitabständen. Wird ein kritischer Feuchtegehalt überschritten, wird ein Alarmsignal erzeugt und ggf. der Abfüllprozess gestoppt.

Fig. 2 zeigt ein weiteres Verwendungsbeispiel der erfindungsgemäßen Vorrichtung. Hierbei ist die aus einem Formkörper 1 oder aus einem mit Granulat 9 befüllten und für den zu adsorbierenden Stoff durchlässigen Behältnis 10, in welchen ein Formkörper 1 eingebracht ist, bestehende Vorrichtung in das Sensorgehäuse 12 eines Prozessgeräts eingebracht und austauschbar angeordnet. Das gewählte Adsorbermaterial der Vorrichtung adsorbiert einen Stoff, welcher beim Eindringen in das Sensorgehäuse 12 und darauf folgender Anlagerung an Geräteteilen zu Problemen führen würde. Beispielsweise ist eine in dem Sensorgehäuse 12 angeordnete Sensorelektronik 11 vor der Anlagerung von Feuchte zu schützen, da dies Kurzschlüsse verursachen kann, was eine Fehlfunktion oder gar den Ausfall des Prozessgeräts zur Folge hat. Eine einfache Trocknungspatrone schützt die Sensorelektronik 11 nur über einen gewissen Zeitraum vor Feuchte, da das Adsorbermaterial eine begrenzte Aufnahmefähigkeit besitzt. Ist das Adsorbermaterial gesättigt, ist der Schutz der Sensorelektronik 11 nicht mehr gewährleistet. Die erfindungsgemäße Vorrichtung weist daher Elektroden 2 auf, welche in das Adsorbermaterial, beispielsweise ein Zeolith, eingebracht sind. Bevorzugt sind diese über elektrische Leitungen mit der Sensorelektronik 11 verbunden, welche die Elektroden 2 mit einem Wechselstrom beaufschlagt und eine elektrische Kenngröße, beispielsweise den Verlustfaktor, ermittelt. Alternativ sind die Elektroden 2 einer separaten Elektronikeinheit zugeordnet. Aus der elektrischen Kenngröße ist der Sättigungsgrad des Adsorbermaterials ermittelbar. Bevorzugt wird der Sättigungsgrad regelmäßig bestimmt und ein Alarmsignal erzeugt, wenn ein bestimmter Sättigungsgrad, beispielsweise 90%, erreicht ist. Dieses Alarmsignal signalisiert zum Beispiel einer Leitwarte, dass ein Austausch des Adsorbermaterials erforderlich ist. Erfolgt ein entsprechender Austausch, ist gewährleistet, dass das zu schützende Element weiterhin geschützt wird und das Prozessgerät lückenlos zuverlässige Ergebnisse liefert. Zeolithen kann aufgenommene Feuchte durch Erhitzen wieder entzogen werden, sodass diese als Trocknungspatrone wieder verwendbar sind.

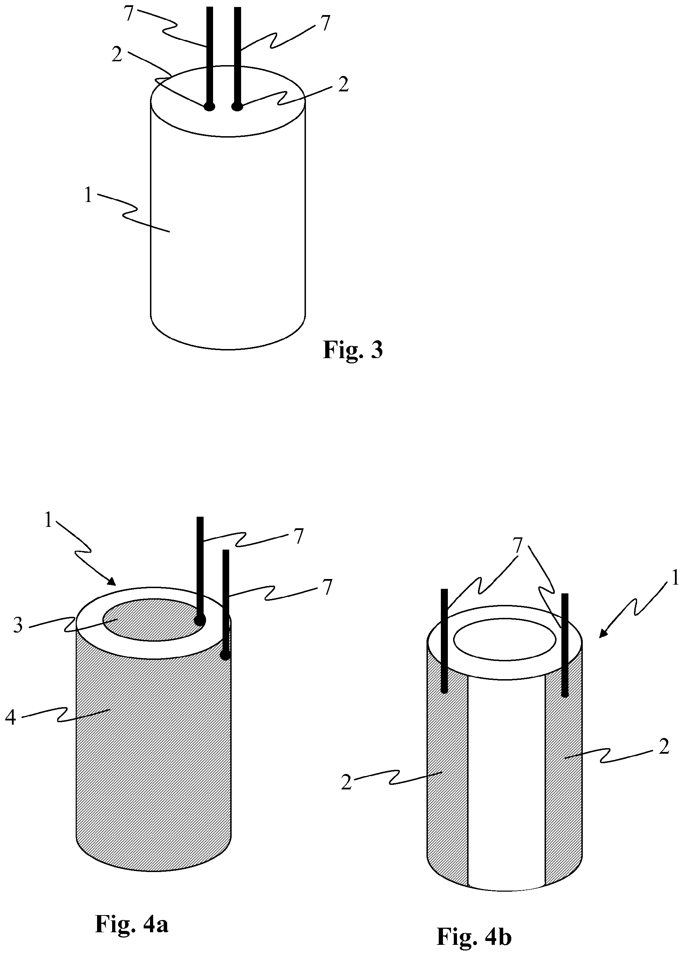

In Fig. 3 ist eine erste Anordnungsvariante der Elektroden 2 am Beispiel eines aus einer Zeolithverbindung bestehenden Formkörpers 1 von zylindrischer Form dargestellt. Die Messung der elektrischen Kenngröße erfolgt direkt im Formkörper 1. Hierzu sind die Elektroden 2 in den Formkörper 1 eingebracht, beispielsweise in Form von metallisierten Bohrungen, und mit elektrischen Leitungen 7 verbunden, über welche sie mit einem elektrischen Signal beaufschlagbar sind.

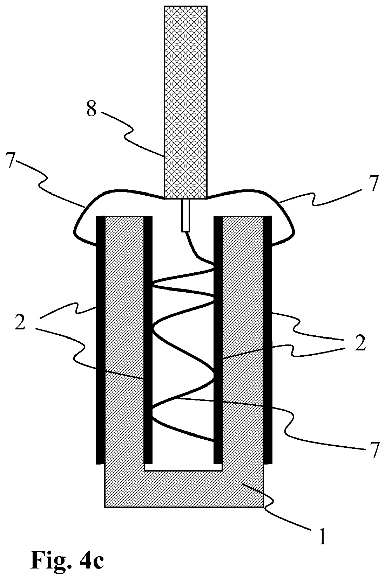

Fig. 4 a-c offenbaren vorteilhafte Ausgestaltungen der Elektroden 2 mit entsprechender elektrischer Kontaktierung, wobei die Elektroden 2 jeweils auf der Oberfläche des als Hohlzylinder dargestellten Formkörpers 1 aufgebracht sind. In Fig. 4a sind die Außenfläche 4 und die Innenfläche 3 des Hohlzylinders mit einer elektrisch leitfähigen Beschichtung versehen, während die ringförmige Ober- und Unterseite jeweils frei von einer Beschichtung sind, sodass die Außenfläche 4 von der Innenfläche 3 elektrisch isoliert ist. Bei der Beschichtung handelt es sich bevorzugt um Silber, Gold, Platin oder Nickel. Geeignet sind alle Metalle mit guter Leitfähigkeit. Die Außenfläche 4 und die Innenfläche 3 sind jeweils durch eine elektrische Leitung 7, beispielsweise einen Draht, kontaktiert. Bei der in der Fig. 4b dargestellten Variante sind zwei Elektroden 2 in Form von einer streifenförmigen Beschichtung auf die Außenfläche 4 des Formkörpers 1 aufgebracht und durch elektrische Leitungen 7 kontaktiert. Die relative Anordnung der beiden Streifen zueinander ist hierbei beliebig wählbar. Obgleich die Streifen in dieser Ausgestaltung die gleiche Länge wie der Zylinder aufweisen, ist dies nicht zwingend der Fall; Streifen mit geringeren Abmessungen sind gleichermaßen geeignet. Fig. 4c zeigt eine vorteilhafte Ausführung der Kontaktierung bei einer Elektrodenanordnung gemäß Fig. 4a. Hierzu wird ein Koaxialkabel 8 in einem Endbereich abisoliert und die Ader mit der Beschichtung der Innenfläche 3 verbunden, während der Schirm die beschichtete Außenfläche 4 kontaktiert.

Die in Fig. 3 und Fig. 4 a-c dargestellten bevorzugten Ausführungsformen können jeweils auch Bestandteile eines größeren Formkörpers 1 von komplexerer Struktur sein. Insbesondere bei der Anordnung einer derartigen Vorrichtung in einem Prozessgerät sind Form und Größe des Formkörpers 1 vorteilhaft entsprechend der Architektur des Prozessgeräts und dem durch die Vorrichtung vor dem zu adsorbierenden Stoff zu schützenden Bereich ausgelegt.

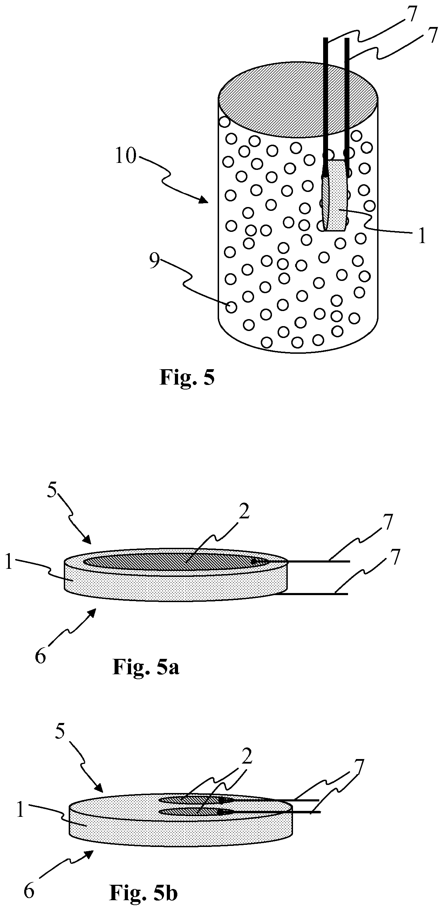

Fig. 5 zeigt ein Behältnis 10, in welchem das Adsorbermaterial als Granulat 9 enthalten ist, z.B. in Form von gesinterten Zeolithkügelchen. Die Wandung des Behältnisses ist bevorzugt durchlässig für den zu adsorbierenden Stoff. Beispielsweise handelt es sich bei dem Behältnis 10 um einen kompakten Einsatz zum Einbringen in das Gehäuse 12 eines Prozessgeräts, insbesondere eine Trocknungspatrone. Um den Sättigungsgrad des Granulats 9 zu bestimmen, ist ein Formkörper 1 aus demselben Adsorbermaterial in das Behältnis 10 eingebracht, welcher mit Elektroden 2 versehen und an eine Elektronikeinheit anschließbar ist.

Die Fig. 5a und 5b zeigen bevorzugte Ausgestaltungen eines scheibenförmigen Formkörpers 1 zum Einbringen in ein Granulat 9 oder Pulver. Selbstverständlich ist die Scheibenform nicht auf die Anwendung in einem Granulat 9 beschränkt. In Fig. 5a ist ein aus dem Adsorbermaterial bestehender keramischer Formkörper 1 abgebildet, bei welchem die kreisförmige Oberseite 5 und Unterseite 6 jeweils mit einer Beschichtung versehen sind, welche die Elektroden 2 bilden und durch elektrische Leitungen 7 kontaktiert sind. Die Beschichtung ist flächig aufgebracht. Andere Ausführungen sind jedoch denkbar, bei welchen die Beschichtung eine ringförmige Fläche einnimmt. Eine alternative Elektrodenanordnung zeigt Fig. 5b. Dort weist die kreisförmige Oberseite 5 des Formkörpers 1 eine Beschichtung in Form von zwei Streifen auf, während die Unterseite 6 frei von einer Beschichtung ist. Die Zuleitungen 7 zur Kontaktierung befinden sich entsprechend auf nur einer Seite des Formkörpers 1.

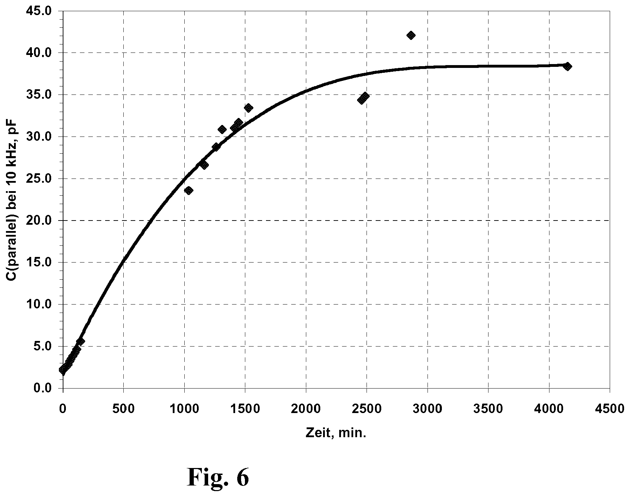

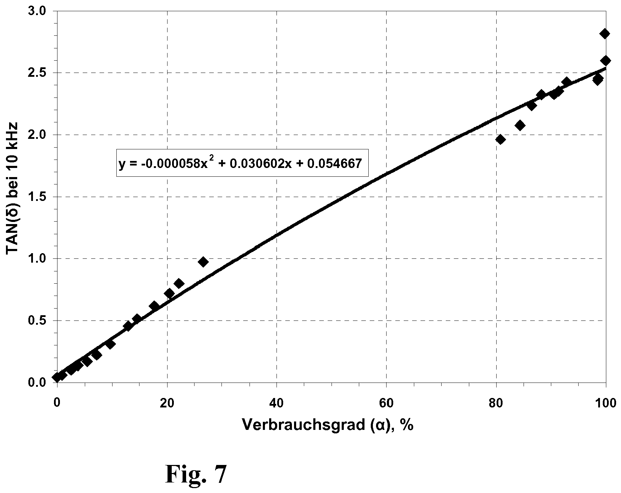

Die Messung des Anteils des in dem Adsorbermaterial enthaltenen adsorbierten Stoffs wird anhand der Fig. 6 und 7 am Beispiel eines Zeoliths als Adsorbermaterial und Wasser als adsorbiertem Stoff erläutert. Prinzipiell sind derartige Kennlinien aber auch für andere Adsorbermaterialien und adsorbierte Stoffe aufnehmbar. Diese unterscheiden sich untereinander beispielsweise in der Steigung. Fig. 6 und Fig. 7 zeigen die Kennlinien, welche mit einer Vorrichtung nach Fig. 5b aus einem gesinterten Zeolithkörper aufgenommen wurden. Hierzu wurde die Vorrichtung in eine Kammer mit 75% relativer Luftfeuchte und 25°C eingebracht.

Fig. 6 zeigt das Ergebnis einer Kapazitätsmessung, wobei in zeitlichen Abständen die Kapazität des von den beiden Streifenelektroden gebildeten Kondensators bei dessen Beaufschlagung mit einem Wechselstrom von 10 kHz Frequenz bestimmt wurde. Die Kapazität steigt mit zunehmendem Feuchtegehalt des Zeoliths an und erreicht nach ca. 3000 min einen Grenzwert, da das Zeolith nach dieser Zeitspanne mit Feuchte gesättigt ist.

In Fig. 7 ist die Kennlinie des Verlustfaktors tan δ in Abhängigkeit von dem Verbrauchsgrad α dargestellt, wobei ein Verbrauchsgrad von 100% der vollständigen Sättigung des Zeoliths mit Feuchte entspricht. Die Kennlinie wurde ebenfalls bei einer Beaufschlagung der Elektroden mit einem Wechselstrom mit 10 kHz Frequenz aufgenommen. Der Verlustfaktor ist ein Werkstoffparameter und unabhängig von der Geometrie des Körpers, mit welchem die Messung erfolgt, weshalb die Bestimmung dieser Messgröße besonders vorteilhaft ist. Wie bereits erwähnt ist der Verlustfaktor aus der Phasenverschiebung zwischen Strom und Spannung des Kondensators bestimmbar. Wie dem Verlauf der Kennlinie zu entnehmen ist, besteht zwischen dem Verlustfaktor tan δ und dem Verbrauchsgrad α ein näherungsweise linearer Zusammenhang über den gesamten Bereich. Der Feuchtegehalt des Zeoliths ist daher aus dem Verlustfaktor eindeutig bestimmbar.

**Bezugszeichenliste**

1  Formkörper
2  Elektrode
3  Innenfläche
4  Außenfläche
5  Oberseite
6  Unterseite
7  Elektrische Leitungen
8  Kabel
9  Granulat
10  Behältnis
100  Lagerbehälter
11  Sensorelektronik
12  Sensorgehäuse

**Patentansprüche**

1. Verfahren zur Bestimmung eines Anteils eines adsorbierten Stoffes, welcher in einem Granulat (9) oder Pulver aus einem Zeolith, einer Zeolithverbindung oder Silikagel als Adsorbermaterial enthalten ist,
wobei das Adsorbermaterial in Form eines Pulvers oder Granulats (9) vorliegt, wobei ein Formkörper (1) aus dem gleichen Material hergestellt wird, wobei mindestens zwei Elektroden (2) voneinander beabstandet auf die Oberfläche (3, 4, 5, 6) des Formkörpers (1) aufgebracht und/oder fest in den Formkörper (1) eingebracht werden, und der Formkörper (1) dauerhaft in das Pulver oder Granulat (9) eingebracht wird,
wobei die Elektroden (2) mit einem Wechselstrom beaufschlagt werden, wodurch die Kapazität und/oder der Verlustfaktor (tan δ) als elektrische Kenngröße des Adsorbermaterials ermittelt wird, und wobei anhand der ermittelten elektrischen Kenngröße der Anteil des adsorbierten Stoffes im Adsorbermaterial und der Sättigungsgrad des Adsorbermaterials ermittelt werden.

2. Verfahren nach Anspruch 1 oder 2, wobei die Elektroden (2) mit einem Wechselstrom mit einer Frequenz zwischen 1 und 100 kHz beaufschlagt werden.

3. Verfahren nach einem der Ansprüche 1 bis 3, wobei der Formkörper (1), welcher in das Granulat (9) oder das Pulver eingebracht wird, in einem Sinterverfahren, einem Pressverfahren und/oder CIM-Verfahren hergestellt wird.

4. Vorrichtung zur Adsorption mindestens eines Stoffes aus der Umgebung, enthaltend ein Granulat (9) oder ein Pulver aus einem Zeolith, einer Zeolithverbindung oder Silikagel als Adsorbermaterial, und zur Bestimmung des im Adsorbermaterial enthaltenen Anteils des adsorbierten Stoffes,
wobei das Adsorbermaterial in Form von Pulver oder Granulat (9) vorliegt, wobei ein Formkörper (1) aus dem gleichen Material dauerhaft in das Pulver oder Granulat (9) eingebracht ist, wobei mindestens zwei Elektroden (2) voneinander beabstandet auf die Oberfläche (3, 4, 5, 6) des Formkörpers (1) aufgebracht und/oder fest in den Formkörper (1) eingebracht sind,
wobei der Vorrichtung eine Elektronikeinheit zugeordnet ist, welche die Elektroden (2) mit einem Wechselstrom beaufschlagt, und hiermit die Kapazität und/oder den Verlustfaktor (tan δ) als elektrische Kenngröße des Adsorbermaterials ermittelt, und wobei die Elektronikeinheit anhand der ermittelten elektrischen Kenngröße den in dem Adsorbermaterial enthaltenen Anteil des adsorbierten Stoffes und den Sättigungsgrad des Adsorbermaterials bestimmt.

5. Vorrichtung nach Anspruch 4, wobei das Adsorbermaterial Poren aufweist.

6. Vorrichtung nach Anspruch 4 oder 5, wobei der aus dem Adsorbermaterial bestehende Formkörper (1) in einem Sinterverfahren und/oder einem Pressverfahren oder einem CIM-Verfahren hergestellt ist.

7. Vorrichtung nach Anspruch 6, wobei der Formkörper (1) im Wesentlichen scheibenförmig, ringförmig, quaderförmig oder von zylindrischer Gestalt ist.

8. Vorrichtung nach einem der Ansprüche 4 bis 7,

wobei die Elektroden (2) in Form einer flächigen oder streifenförmigen Beschichtung auf die Oberfläche (3, 4, 5, 6) des Formkörpers (1) aufgebracht sind.

9. Vorrichtung nach einem der Ansprüche 4 bis 8, wobei es sich bei dem adsorbierten Stoff um Wasser, Ammoniak, Schwefelwasserstoff, Kohlendioxid, Ozon und/oder Fluorwasserstoff handelt.

10. Verwendung einer Vorrichtung nach Anspruch 4 zur Bestimmung oder Überwachung eines Sättigungsgrades des als Granulat (9) oder Pulver in einem Behälter (100) gelagerten Adsorbermaterials.

11. Verwendung einer Vorrichtung nach Anspruch 4 als austauschbarer Einsatz zur Aufnahme von Feuchte in einem Prozessgerät.

**Claims**

1. Procedure for determining the proportion of an adsorbed substance, which is contained in a granulate (9) or a powder of a zeolite, a zeolite compound or silica gel as the adsorber material, wherein the adsorber material is present in the form of a powder or a granulate (9), wherein a molded body (1) is made from the same material, wherein at least two electrodes (2), spaced at a distance from one another, are applied on the surface (3, 4, 5, 6) of the molded body (1) and/or are firmly introduced into the molded body (1), and the molded body (1) is introduced in a permanent manner into the powder or granulate (9), wherein an alternating current is applied to the electrodes (2) as a result of which the capacitance and/or the loss factor (tan $\delta$) is/are determined as an electrical characteristic value of the adsorber material, and wherein the proportion of the adsorbed substance in the adsorber material and the degree of saturation of the adsorber material are determined on the basis of the electrical characteristic value determined.

2. Procedure as claimed in Claim 1 or 2, wherein an alternating current with a frequency between 1 and 100 kHz is applied to the electrodes (2).

3. Procedure as claimed in one of the Claims 1 to 3, wherein the molded body (1), which is introduced into the granulate (9) or the powder, is produced according to a sintering method, a press method and/or a CIM method.

4. Apparatus for the adsorption of at least a substance from the environment, containing a granulate (9) or a powder of a zeolite, a zeolite compound or silica gel as the adsorber material, and to determine the proportion of the adsorbed substance contained in the adsorber material, wherein the adsorber material is present in the form of a powder or granulate (9), wherein a molded body (1) from the same material is permanently introduced into the powder or granulate (9), wherein at least two electrodes (2), spaced at a distance from one another, are applied on the surface (3, 4, 5, 6) of the molded body (1) and/or are firmly introduced into the molded body (1), wherein an electronics unit is assigned to the apparatus, said unit applying an alternating current to the electrodes (2) and thereby determining the capacitance and/or the loss factor (tan $\delta$) as an electrical characteristic value of the adsorber material, and wherein the electronics unit determines the proportion of the adsorbed substance in the adsorber material and the degree of saturation of the adsorber material on the basis of the electrical characteristic value determined.

5. Apparatus as claimed in Claim 4, wherein the adsorber material has pores.

6. Apparatus as claimed in Claim 4 or 5, wherein the molded body (1) consisting of the adsorber material is made in a sintering method, a press method and/or a CIM method.

7. Apparatus as claimed in Claim 6, wherein the molded body (1) is essentially discoidal, annular, cuboidal or cylindrical.

8. Apparatus as claimed in one of the Claims 4 to 7, wherein the electrodes (2) are applied in the form of an extensive or strip-like coating on the surface (3, 4, 5, 6) of the molded body (1).

9. Apparatus as claimed in one of the Claims 4 to 8, wherein the adsorbed substance is water, ammoniac, hydrogen sulfide, carbon dioxide, ozone and/or hydrogen fluoride.

10. Use of an apparatus as claimed in Claim 4 to determine or monitor a degree of saturation of the adsorber material stored as granulate (9) or powder in a vessel (100).

11. Use of an apparatus as claimed in Claim 4 as a replaceable insert to absorb moisture in a process device.

**Revendications**

1. Procédé destiné à la détermination d'une proportion d'une substance adsorbée, laquelle est contenue dans un granulat (9) ou une poudre d'une zéolithe, d'un composé de zéolithe ou de gel de silice comme matériau adsorbant,
le matériau adsorbant se présentant sous la forme d'une poudre ou d'un granulat (9), un corps moulé (1) étant fabriqué à partir du même matériau, au moins deux électrodes (2), espacées l'une de l'autre, étant appliquées sur la surface (3, 4, 5, 6) du corps moulé (1) et/ou fermement introduites dans le corps moulé (1), et le corps moulé (1) étant introduit de manière permanente dans la poudre ou le granulat (9),
un courant alternatif étant appliqué aux électrodes (2), ce par quoi la capacité et/ou le facteur de perte ($\tan \delta$) sont déterminés comme une grandeur caractéristique électrique du matériau adsorbant,
et procédé pour lequel la proportion de la substance adsorbée dans le matériau adsorbant et le degré de saturation du matériau adsorbant sont déterminés sur la base de la grandeur caractéristique électrique déterminée.

2. Procédé selon la revendication 1 ou 2,
pour lequel un courant alternatif d'une fréquence comprise entre 1 et 100 kHz est appliqué aux électrodes (2).

3. Procédé selon l'une des revendications 1 à 3,
pour lequel le corps moulé (1), qui est introduit dans le granulat (9) ou la poudre, est fabriqué selon un procédé de frittage, un procédé de pressage et/ou un procédé CIM.

4. Dispositif destiné à l'adsorption d'au moins une substance de l'environnement, contenant un granulat (9) ou une poudre d'une zéolithe, d'un composé de zéolithe ou de gel de silice comme matériau adsorbant, et lequel dispositif est destiné à la détermination de la proportion de la substance adsorbée contenue dans le matériau adsorbant,
le matériau adsorbant se présentant sous la forme d'une poudre ou d'un granulat (9), un corps moulé (1) du même matériau étant introduit en permanence dans la poudre ou le granulat (9), au moins deux électrodes (2), espacées l'une de l'autre, étant appliquées sur la surface (3, 4, 5, 6) du corps moulé (1) et/ou solidement introduites dans le corps moulé (1),
une unité électronique étant associée au dispositif, laquelle unité applique un courant alternatif aux électrodes (2) et détermine ainsi la capacité et/ou le facteur de perte ($\tan \delta$) en tant que grandeur caractéristique électrique du matériau adsorbant,
et dispositif pour lequel l'unité électronique détermine la proportion de la substance adsorbée contenue dans le matériau adsorbant et le degré de saturation du matériau adsorbant sur la base de la grandeur caractéristique électrique déterminée.

5. Dispositif selon la revendication 4,
pour lequel le matériau adsorbant comporte des pores.

6. Dispositif selon la revendication 4 ou 5,
pour lequel le corps moulé (1) constitué du matériau adsorbant est fabriqué par un procédé de frittage et/ou un procédé de pressage ou un procédé CIM.

7. Dispositif selon la revendication 6,
pour lequel le corps moulé (1) est pour l'essentiel de conception discoïde, annulaire, parallélépipédique ou cylindrique.

8. Dispositif selon l'une des revendications 4 à 7,
pour lequel les électrodes (2) sont appliquées sous la forme d'un revêtement plat ou en forme de bande sur la surface (3, 4, 5, 6) du corps moulé (1).

9. Dispositif selon l'une des revendications 4 à 8,
pour lequel, concernant la substance adsorbée, il s'agit d'eau, d'ammoniac, de sulfure d'hydrogène, de dioxyde de carbone, d'ozone et/ou de fluorure d'hydrogène.

10. Utilisation d'un dispositif selon la revendication 4 destiné à la détermination ou à la surveillance d'un degré de saturation du matériau adsorbant stocké sous forme de granulat (9) ou de poudre dans un récipient (100).

11. Utilisation d'un dispositif selon la revendication 4 en tant qu'insert échangeable destiné à absorber l'humidité dans un appareil de process.

**Fig. 1**

**Fig. 2**

**Fig. 3**

**Fig. 4a**

**Fig. 4b**

**Fig. 4c**

**Fig. 5**

**Fig. 5a**

**Fig. 5b**

**Fig. 6**

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19717711 A1
- DD 135241
- US 4552570 A
- US 4876890 A
- EP 01464923 A1